# EUROPEAN PATENT APPLICATION

(11) **EP 3 090 987 A1**
(43) Date of publication of application: **09.11.2016**
(21) Application number: 16168613.4
(22) Date of filing: 06.05.2016
(51) Int. Cl.: C02F 1/467

(54) **APPARATUS AND METHOD FOR TREATING BALLAST WATER BY USING ELECTROLYSIS**

(30) Priority: 08.05.2015 KR 20150064269
(71) Applicant: Tech Cross Co., Ltd., Seoul 135-879 (KR)
(72) Inventor: PARK, Kyuwon, 608-090 Busan (KR); KIM, Seongtae, 336-750 Chungcheongnam-do (KR); LEE, Haidon, 443-470 Gyeonggi-do (KR); PARK, Yongseok, 451-885 Gyeonggi-do (KR); LEE, Gwangho, 46539 Busan (KR)
(74) Representative: Cabinet Plasseraud

(57) **Abstract**

Provided is an apparatus for treating ballast water by using electrolysis. The apparatus includes: a plurality of ballast tanks into which ballast water is introduced; a main stream of the ballast water supplied to the ballast tank; a side stream of the ballast water branched from the main stream of the ballast water; an electrolytic cell configured to perform electrolysis of the side stream of the ballast water; a first salinity measuring unit configured to measure a salinity of the side stream of the ballast water introduced into the electrolytic cell; a second salinity measuring unit configured to measure a salinity of ballast water introduced into at least one of the ballast tanks; and a controller configured to control to supply the ballast water to the electrolytic cell from one of the plurality of ballast tanks based on the salinity of ballast water measured by the second salinity measuring unit, when the salinity of the side stream of the ballast water measured by the first salinity measuring unit is less than a threshold value.

## Description

### BACKGROUND OF THE INVENTION

### Field of the Invention

The present disclosure relates to an apparatus and a method for treating ballast water by using electrolysis, and more particularly, to an apparatus and a method for treating ballast water by using electrolysis capable of easily responding to change in salinity of ballast water introduced into a ship.

### Description of the Related Art

Ballast water is water filled in a ship in operation so that the ship may suitably maintain a draft and a trim angle while having sufficient stability at sea. For the purpose of safe sailing, since a sufficient stability restoring force and a proper draft are essential, the ship should be filled with the ballast water before departure. Further, when a ship arrives at the destination, the ballast water is exhausted from the arrival point. When the ship departs, the ship is again filled with the ballast water. To this end, the ship includes a ballast tank filled with ballast water, a water intake and drainage facility, and the like.

Meanwhile, the ballast water uses sea water around the ship. However, the sea water includes various bacteria, or toxic microorganisms, or animal or vegetable biology configuring corresponding area ecosystem. The ballast tank is filled with the sea water mixed with the bacteria, the toxic algae, or the animal or vegetable biology and the mixed sea water is transferred to the arrival point to be exhausted.

Since a large-scale ship such as an oil tanker or a containership sails across the ocean, bacteria or animal or vegetable biology distributed in, for example, a coast of a harbor in USA may be exhausted to Busan harbor in Korea after crossing a pacific ocean to destroy a marine ecosystem in Busan area. When the toxic microorganisms is pathogens such as vibrio cholera, the pathogen may damage animals or persons living on land. Therefore, an apparatus for treating ballast water for removing the pathogens, toxic microorganisms or various animal or vegetable biology contained in the ballast water should be compulsorily installed.

The apparatus for treating ballast water is not able to properly perform electrolysis in a low-salt, low-temperature seawater area so that chlorine generation performance is deteriorated. In order to solve this problem, generally, a heater or a salt tank is separately installed. However, due to additional equipment, a weight of ship is increased and an additional cost occurs.

Since a power consumption amount of the apparatus for treating ballast water is significantly changed according to the salinity of the ballast water, the power consumption amount is significantly increased when the apparatus for treating ballast water treats ballast water having a low salinity.

For example, in order to treat sea water of 1,000m³/h having a salinity of 30PSU, 4.0V and 7,000A are consumed so that consumed power becomes 28kW/h. However, in order to produce the same TRO from the sea water of 1,000m³/h having a salinity of 1PSU, 18V and 8,000A are consumed so that the consumed power becomes 144kW/h. Thus, power consumption is changed five times or more according to the salinity.

In order to solve this problem, there is a need for an apparatus and a controller capable of maintaining the salinity to be equal to or greater than a certain level.

An electrolysis based ballast water treatment system using a fresh water generator in a ship is disclosed in Korean publication of unexamined applications No. 2011-0109299. Accordingly, the performance of the ballast water treatment system may be improved in low salt sea water. However, the fresh water generator is not always operated, and the problem cannot be solved in a low temperature seawater area.

### SUMMARY OF THE INVENTION

The present disclosure has been made in view of the above problems, and provides an apparatus and a method for treating ballast water by using electrolysis capable of improving a generation performance of an oxidizer and minimizing a power consumption when a salinity of ballast water introduced into a ship is low.

In accordance with an aspect of the present disclosure, an apparatus for treating ballast water by using electrolysis includes: a plurality of ballast tanks into which ballast water is introduced; a main stream of the ballast water supplied to the ballast tank; a side stream of the ballast water branched from the main stream of the ballast water; an electrolytic cell configured to perform electrolysis of the side stream of the ballast water; a first salinity measuring unit configured to measure a salinity of the side stream of the ballast water introduced into the electrolytic cell; a second salinity measuring unit configured to measure a salinity of ballast water introduced into at least one of the ballast tanks; and a controller configured to control to supply the ballast water to the electrolytic cell from one of the plurality of ballast tanks based on the salinity of ballast water measured by the second salinity measuring unit, when the salinity of the side stream of the ballast water measured by the first salinity measuring unit is less than a threshold value.

In accordance with another aspect of the present disclosure, a method for treating ballast water by using electrolysis includes: introducing the ballast water into a ship; introducing a part of the introduced ballast water into an electrolytic cell; generating an oxidant through electrolysis in the electrolytic cell; obtaining a salinity of the ballast water; and introducing the ballast water in a ballast tank into the electrolytic cell when the obtained salinity is less than a threshold value.

### BRIEF DESCRIPTION OF THE DRAWINGS

The objects, features and advantages of the present disclosure will be more apparent from the following detailed description in conjunction with the accompanying drawings, in which:
FIG. 1 is a block diagram illustrating a configuration of an apparatus for treating ballast water using electrolysis according to an embodiment of the present disclosure;
FIG. 2 is a graph illustrating the relationship between an applied voltage and a salinity;
FIG. 3 illustrates a first flow path of ballast water in the apparatus for treating ballast water using electrolysis according to an embodiment of the present disclosure;
FIG. 4 illustrates a second flow path of ballast water in the apparatus for treating ballast water using electrolysis according to another embodiment of the present disclosure;
FIG. 5 is a flowchart illustrating a method for treating ballast water using electrolysis according to an embodiment of the present disclosure; and
FIG. 6 is a flowchart illustrating a method for treating ballast water using electrolysis according to another embodiment of the present disclosure.

### DETAILED DESCRIPTION OF EXEMPLARY EMBODIMENTS

Exemplary embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

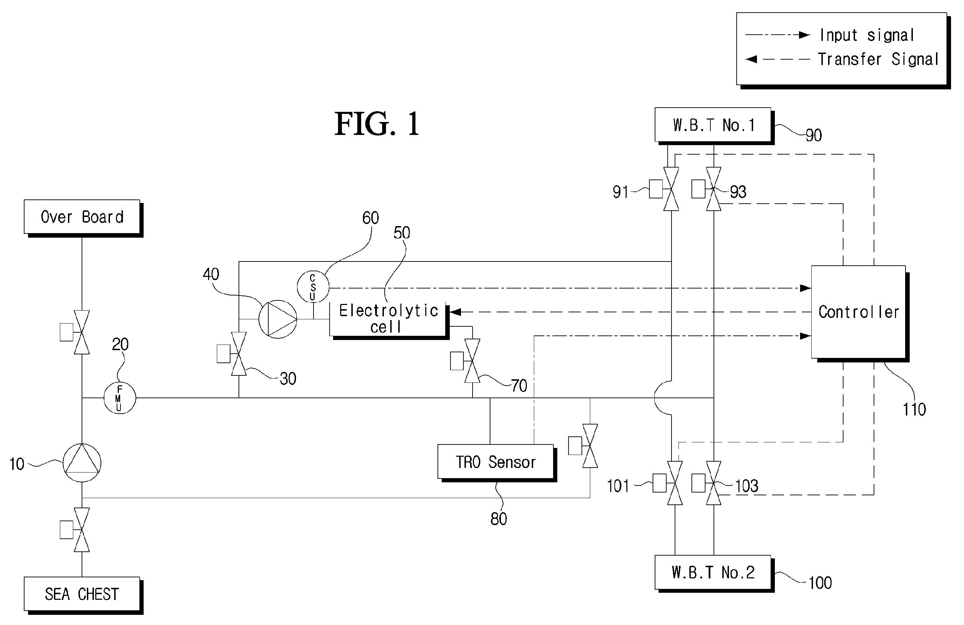

FIG. 1 is a block diagram illustrating a configuration of an apparatus for treating ballast water using electrolysis according to an embodiment of the present disclosure. As shown in FIG. 1, the apparatus for treating ballast water using electrolysis according to an embodiment of the present disclosure may include an electrolytic cell 50 configured to perform electrolysis on a part of ballast water introduced into a ship, and a plurality of ballast tanks 90 and 100 configured to store the ballast water processed in the electrolytic cell 50.

A suction pump 10 may be a pump configured to introduce sea water in order to store the ballast water in the ballast tanks 90 and 100.

A flowmeter 20 may be installed in an exhaustion part of the suction pump 10 to measure a flow amount of sea water introduced from the suction pump 10.

A first valve 30 may be a valve configured to distribute a part of sea water exhausted from the flowmeter 20. The first valve 30 may adjust an amount of the sea water flowing in a first direction or a second direction by selectively opening/closing a fluid path in the first direction or adjusting an open degree. In this case, the first direction may be a direction in which the sea water is introduced into electrolytic cell 50 in order to generate an oxidizer, and the second direction may be a direction in which the sea water to be stored in the ballast tanks 90 and 100 is introduced.

A boost pump 40 may be installed between the first valve 30 and the electrolytic cell 50 so that the sea water introduced in the first direction flows to the electrolytic cell 50.

A salinity sensor 60 may be a sensor for measuring a salt of the sea water introduced in the first direction and is installed between the boost pump 40 and the electrolytic cell 50. Although not shown in FIG. 1, a temperature sensor for measuring a temperature of the sea water in the first direction may be further provided at an input side of the electrolytic cell 50.

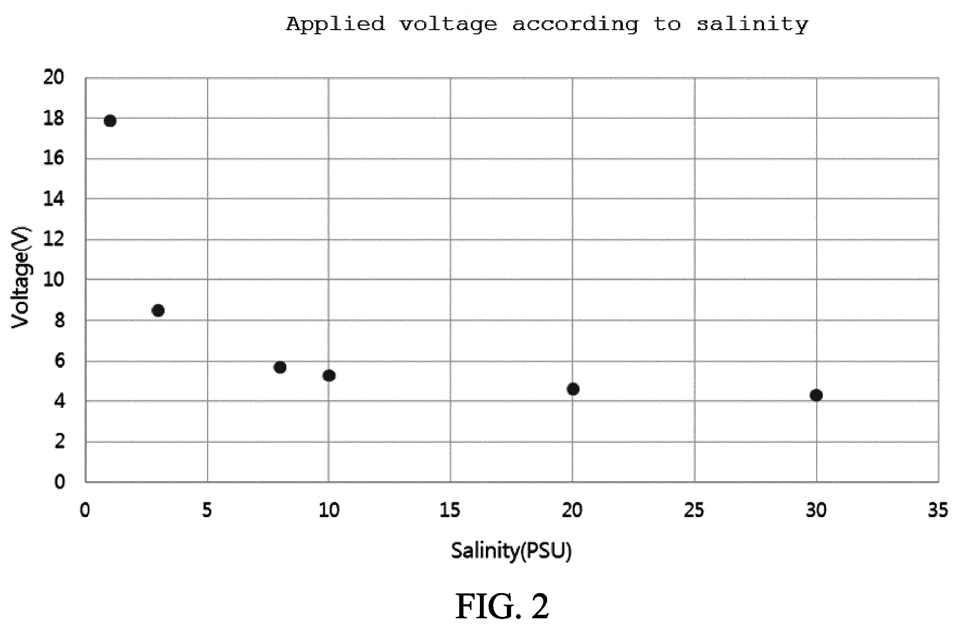

The apparatus for treating ballast water using electrolysis according to an embodiment of the present disclosure may obtain salinity information through an applied voltage of an electrode of the electrolytic cell 50 without the salinity sensor 60. FIG. 2 is a graph illustrating the relationship between an applied voltage and a salinity, and a horizontal axis of the graph represents the salinity and a vertical axis represents an applied voltage.

Referring to FIG. 2, during the electrolysis, the applied voltage may be rapidly changed based on 8 PSU. That is, when performing electrolysis for the ballast water having a salinity lower than 8 PSU, the applied voltage may be rapidly increased. When performing electrolysis for the ballast water having a salinity greater than the 8 PSU, the applied voltage may be substantially maintained constant. As described above, the salinity of the introduced sea water may be determined from the applied voltage based on the graph of FIG. 2.

Meanwhile, the first valve 30 may not only distribute the introduced sea water but also may adjust an amount the sea water introduced in each distributed direction. That is, the salinity sensor 60 and a total residual oxidant (hereinafter referred to as 'TRO') sensor 80 may measure a required amount of oxidant to adjust an amount of the sea water introduced in the first direction. In this case, the amount of the sea water may be adjusted by adjusting an opening degree of the first valve 30. However, the amount of the sea water may be adjusted by adjusting a rotational speed of the boost pump 40 while maintaining the opening degree of the first valve 30, and the amount of the sea water may be adjusted by controlling both of the first valve 30 and the boost pump 40.

The electrolytic cell 50 is an apparatus for killing marine biology in the ballast water by generating sodium hypochlorite (NaOCl) through electrolysis of sodium chloride (NaCl) contained in the sea water. Although the sodium hypochlorite (NaOCl) is described as an example of the oxidant, but any oxidant obtained by using a chloride ion generated during the electrolysis procedure for the sea water may be included in the oxidant generated by the electrolytic cell 50 according to an embodiment of the present disclosure.

A second valve 70 may be installed in an exhaustion side of the electrolytic cell 50, and may be open so that the sea water in the first direction including the oxidant generated from the electrolytic cell 50 may be mixed with the sea water in the second direction.

The TRO sensor 80 may be installed in a position where the sea water in the first direction and the sea water in the second direction are mixed so that it is possible to measure a concentration of the oxidant in the sea water (ballast water) introduced in the ballast tanks 90 and 100. A plurality of ballast tanks 90 and 100 may be an apparatus for storing the ballast water. The sea water introduced into the suction pump 100 may be distributed into the first direction and the second direction, and the oxidant generated from the electrolytic cell 50 may be included in the sea water in the first direction. Then, the sea water in the first direction may be mixed again with the sea water in the second direction and the mixed sea water may be stored in at least one of the ballast tanks 90 and 100.

Introduction valves 93 and 103 and exhaustion valves 91 and 101 may be installed in introduction sides of the ballast tanks 90 and 100, respectively, so that introduction or exhaustion of the ballast water to or from the ballast tanks 90 and 100 may be controlled.

A salinity sensor (not shown) for measuring the salinity of the stored ballast water may be installed in the ballast tanks 90 and 100. Further, a level sensor (not shown) for measuring a fluid amount in the ballast tanks 90 and 100 may be provided.

In the apparatus for treating ballast water using electrolysis according to an embodiment of the present disclosure, the salinity of the ballast water stored in each of the ballast tanks 90 and 100 may be obtained through the salinity sensor (not shown) which is installed in each of the ballast tanks 90 and 100. However, although there is no salinity sensor, salinity information may be obtained through sampling with respect to every ballast tanks 90 and 100.

In addition, the salinity of the ballast tanks 90 and 100 may be measured through the salinity sensor 60 installed in a location in which the ballast water in the second direction is introduced to the electrolytic cell 50. That is, after the salinity of the ballast water in the second direction is measured through the salinity sensor 60, the ballast tank to which the ballast water in the second direction is introduced may be determined by checking whether the introduction valves 93 and 103 are opened. In this case, it is obvious that the salinity information may be obtained from the applied voltage of the electrolytic cell 50 with reference to the graph of FIG. 2 instead of the salinity sensor 60.

As described above, the apparatus for treating ballast water using electrolysis according to an embodiment of the present disclosure may measure the salinity of the ballast water introduced into the electrolytic cell 50 and the salinity of the ballast water stored in the ballast tanks 90 and 100 according to various methods.

As shown in FIG. 2, in the apparatus for treating ballast water using electrolysis according to an embodiment of the present disclosure, since the salinity of the introduced ballast water may influence the applied voltage of the electrolytic cell to control the efficiency of the electrolytic cell 50, it is necessary to maintain the salinity of the sea water (ballast water) introduced into the electrolytic cell to be a certain level or more. The apparatus for treating ballast water using electrolysis according to an embodiment of the present disclosure may minimize the change in power consumption of the electrolytic cell 50 according to the salinity by introducing the ballast water stored in the ballast tanks 90 and 100 into the electrolytic cell 50 when the salinity of the introduced ballast water is less than the certain level.

A controller 110 may receive an input signal of information on the salinity of ballast water in the first direction which is introduced into the electrolytic cell 50 from the salinity sensor 60. In addition, the controller 110 may receive an input signal of information on a concentration of oxidant of the ballast water obtained by adding the sea water in the first direction to the sea water in the second direction. Moreover, the controller 100 may receive an input signal of information on opening/closing of introduction valves 93 and 103 and/or exhaustion valves 91 and 101 of the ballast tanks 90 and 100, and may receive opening/closing information of other valves such as the first valve 30 and the second valve 70.

The controller 110 may receive and process the above input signals and transfer a control signal for a voltage and/or a current applied to the electrolytic cell 50. The controller 110 may transfer a control signal capable of opening/closing the introduction valves 93 and 103 and the exhaustion valves 91 and 101. The controller 110 may be configured to transfer a control signal capable of opening/closing other valves such as the first valve 30 and the second valve 70.

The above-configured controller 110 may control a current and/or a voltage applied to the electrolytic cell 50 based on a flow rate of the ballast water in the first direction and a TRO concentration measured by the TRO sensor 80. When the concentration of oxidant measured by the TRO sensor 80 is equal to less or than a certain value, the controller 110 may control the current and/or the voltage applied to the electrolytic cell 50 to enhance a production amount of the oxidant. The controller 110 may control an opening degree of the first valve 30 to increase an amount of ballast water in the first direction, which may enhance the production amount of the oxidant.

Meanwhile, although not shown in FIG. 1, a filter (not shown) may be installed to remove impurities which may be included in the ballast water introduced into a front end or a rear end of the flowmeter 20.

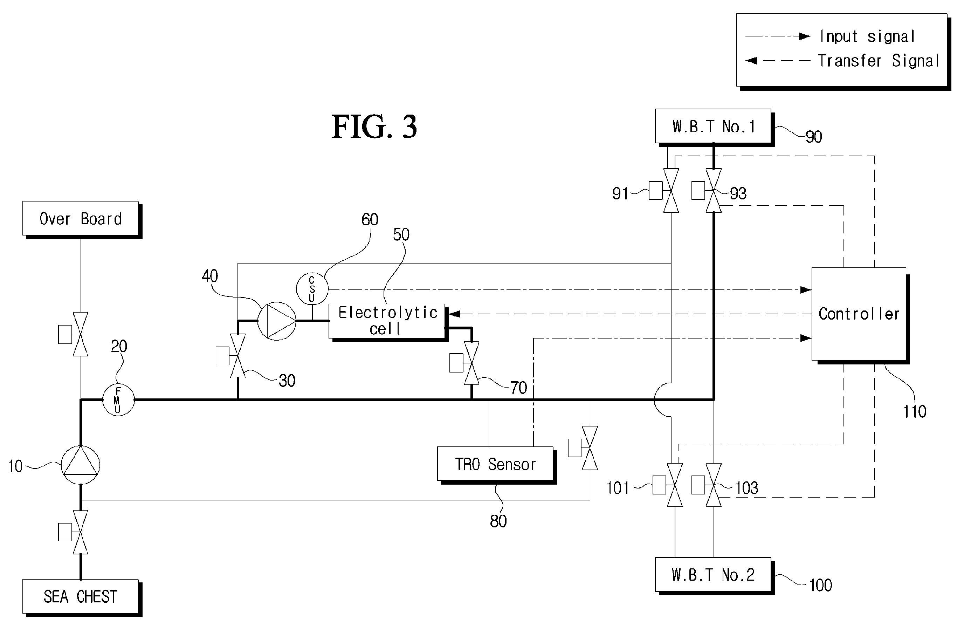

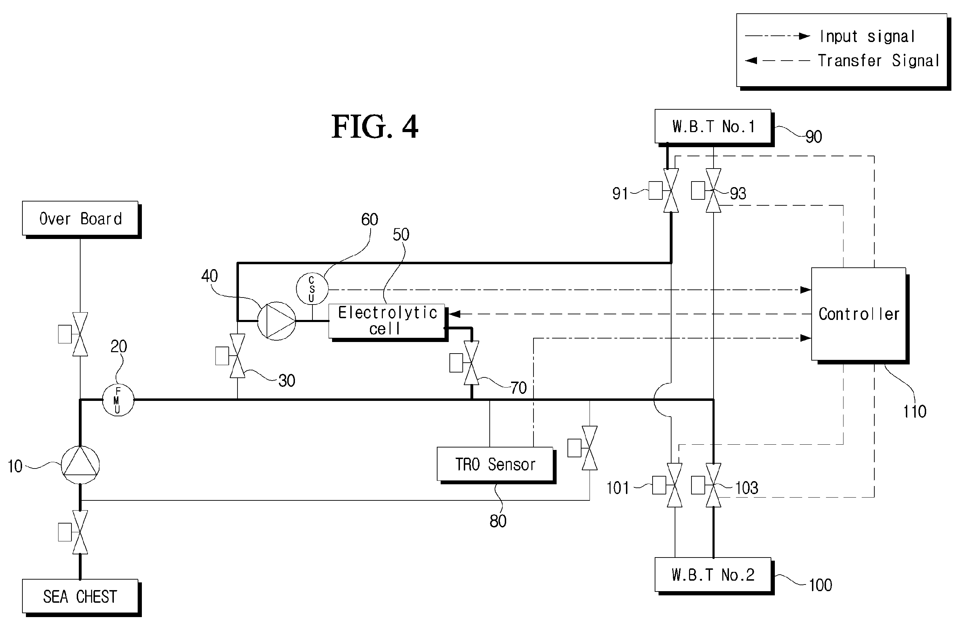

FIG. 3 illustrates a first flow path of ballast water in the apparatus for treating ballast water using electrolysis according to an embodiment of the present disclosure, and FIG. 4 illustrates a second flow path of ballast water in the apparatus for treating ballast water using electrolysis according to another embodiment of the present disclosure. In this case, the first and second flow paths may be expressed with a line thicker than a line indicating a pipe.

The first flow path of FIG. 3 may be the case in which the salinity of ballast water introduced into the electrolytic cell 50 is equal or greater than a certain level, and may be a flow path where a part of ballast water sucked through the suction pump 10 flows in the first direction through the first valve 30 which is open, and then is introduced into the electrolytic cell 50 to perform electrolysis.

The second flow path of FIG. 4 may be the case in which the salinity of ballast water introduced into the electrolytic cell 50 is less than a certain level, and may be a flow path where the ballast water sucked through the suction pump 10 flows in the second direction by the first valve 30 which is closed, and an exhaustion valve 91 of a specific ballast tank 90 storing the ballast water having a salinity of a certain level or greater is open so that the ballast water is introduced into the electrolytic cell 50 to perform electrolysis.

That is, the apparatus for treating ballast water using electrolysis according to an embodiment of the present disclosure may include a first salinity measuring unit for measuring a salinity of ballast water (side stream) in the first direction introduced into the electrolytic cell 50 and a second salinity measuring unit for measuring a salinity of ballast water introduced into at least one of a plurality of ballast tanks 90 and 100. When the salinity measured by the first salinity measuring unit is less than a threshold value, the apparatus for treating ballast water using electrolysis may control to supply ballast water to the electrolytic cell 50 from one of the plurality of ballast tanks 90 and 100 based on the salinity measured by the second salinity measuring unit.

In this case, the first salinity measuring unit may be configured of the salinity sensor 60 which is installed in an introduction pipe for introducing the ballast water (side stream) in the first direction into the electrolytic cell 50. Alternatively, the first salinity measuring unit may use a method of calculating the salinity from the graph illustrating a relationship between a voltage applied to the electrolytic cell 50 and the salinity shown in FIG. 2.

In addition, the second salinity measuring unit may measure a salinity of ballast water introduced into the ballast tanks 90 and 100 by using the salinity sensor 60 configuring the first salinity measuring unit, and may measure the salinity by sampling the ballast water stored in the ballast tanks 90 and 100 or by installing a salinity sensor (not shown) in the ballast tanks 90 and 100.

As described above, information on the ballast tank storing ballast water having a proper salinity may be obtained by knowing the salinity of ballast water currently processed in the electrolytic cell 50, and by storing information on the ballast tank to which the ballast water is introduced in the controller, or by sampling the above information on the ballast tank for every ballast tank. Next, when ballast water having a ballast salinity lower than a certain value is introduced, the controller 110 may transfer a control signal based on the obtained salinity information for each ballast tank so that the ballast water stored in the ballast tank having a salinity higher than the certain value is automatically introduced into the electrolytic cell 500 to perform electrolysis.

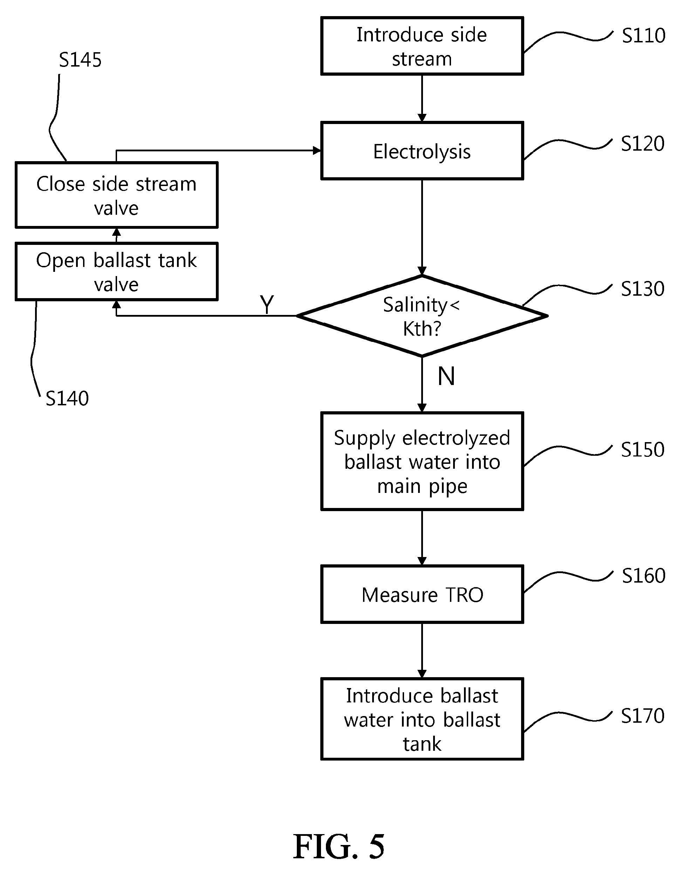

FIG. 5 is a flowchart illustrating a method for treating ballast water using electrolysis according to an embodiment of the present disclosure. Hereinafter, the method for treating ballast water using electrolysis according to an embodiment of the present disclosure is described with reference to FIG. 1 and FIG. 5.

The method for treating ballast water using electrolysis according to an embodiment of the present disclosure may include: introducing ballast water into a ship (S110), determining a salinity of the introduced ballast water (S130), and processing the ballast water according to the determination result of the salinity.

First, the ballast water is introduced into the ship through a sea chest, and then a partial ballast water (side stream) flows to the electrolytic cell 50 (S110). Next, the electrolysis is performed for the side steam in the electrolytic cell 50 (S120). In this case, salinity information of the side steam is obtained based on a voltage applied to the electrolytic cell 50 (see FIG. 2).

Next, the obtained salinity information is compared with a threshold value Kth. When the obtained salinity information is less than the threshold value Kth, the exhaustion valve 91 of a specific ballast tank 90 is opened (S140), and the ballast water stored in tank is introduced into the electrolytic cell 50 to perform electrolysis (S120), and the first valve 30 introducing the side steam is closed to block the introduction of sea water in the first direction (S145).

Meanwhile, the method of obtaining the salinity of ballast water may use the above mentioned sensor or may use the method of using an applied voltage-salinity graph. In addition, the method of obtaining the salinity of ballast water stored in a ballast tank may use one of the above mentioned methods.

The electrolysis step S120 may control an applied current based on a fluid amount of the ballast water introduced into the electrolytic cell 50 and a concentration of oxidant (residual oxidation concentration) of the ballast water exhausted from the electrolytic cell 500.

The electrolyzed ballast water may be supplied into a main pipe (S150), the concentration of oxidant may be measured by the TRO sensor 80 (S160), and then the supplied ballast water may be introduced into at least one of a plurality of ballast tanks (S170).

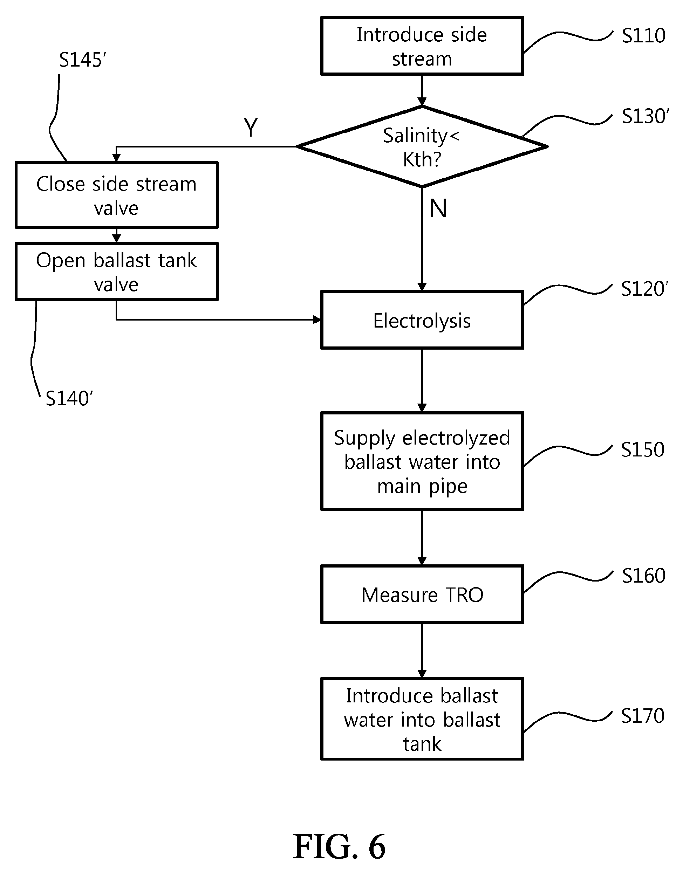

FIG. 6 is a flowchart illustrating a method for treating ballast water using electrolysis according to another embodiment of the present disclosure. Hereinafter, the method for treating ballast water using electrolysis according to another embodiment of the present disclosure is described with reference to a drawing. In the following description of another embodiment of the present disclosure, the constituent elements having the same shape and functions as those of the above embodiment are assigned with the same reference numerals and a detailed description is omitted.

After the side stream is introduced (S110), salinity information may be firstly obtained through the salinity sensor 60 located at an introduction part of the electrolytic cell 50, and the obtained salinity information may be compared with a threshold value Kth. When the obtained salinity information is less than the threshold value Kth, the first valve 30 introducing the side stream may be closed to block the introduction of sea water in the first direction (S145'), and the exhaustion valve 91 of the specific ballast tank 90 may be opened (S140') so that the ballast water stored in a tank is introduced to perform electrolysis (S120').

The closing of the side stream valve (S145, S145') and the opening of the ballast tank valve (S140, S140') illustrated in FIG. 5 and FIG. 6 may be almost simultaneously performed or may be sequentially performed with a little time delay, and may be performed by changing the order of shown operation.

As described above, the apparatus for treating ballast water by using electrolysis according an embodiment of the present disclosure may measure salinity of side stream introduced into the electrolytic cell, block introduction of the side steam when the salinity of side stream is lower than a threshold value, and introduce the ballast water having a salinity higher than the threshold value among ballast waters stored in the ballast tank into the electrolytic cell 50 to improve power efficiency and allow efficient electrolysis.

According to the present disclosure, the efficiency of the electrolysis can be improved by monitoring a salinity of ballast water introduced into an electrolytic cell.

Further, according to the present disclosure, even if ballast water having a low salinity is introduced, power consumption for electrolysis can be reduced by alternately introducing ballast water having a suitable salinity.

In addition, according to the present disclosure, a user may trust a product by continuously performing the electrolysis regardless of a salinity of the ballast water.

Hereinabove, although the present disclosure has been described with reference to exemplary embodiments and the accompanying drawings, the present disclosure is not limited thereto, but may be variously modified and altered by those skilled in the art to which the present disclosure pertains without departing from the spirit and scope of the present disclosure claimed in the following claims.

## Claims

1. An apparatus for treating ballast water by using electrolysis, the apparatus comprising:
a plurality of ballast tanks into which ballast water is introduced;
a main stream of the ballast water supplied to the ballast tank;
a side stream of the ballast water branched from the main stream of the ballast water;
an electrolytic cell configured to perform electrolysis of the side stream of the ballast water;
a first salinity measuring unit configured to measure a salinity of the side stream of the ballast water introduced into the electrolytic cell;
a second salinity measuring unit configured to measure a salinity of ballast water introduced into at least one of the ballast tanks; and
a controller configured to control to supply the ballast water to the electrolytic cell from one of the plurality of ballast tanks based on the salinity of ballast water measured by the second salinity measuring unit, when the salinity of the side stream of the ballast water measured by the first salinity measuring unit is less than a threshold value.

2. The apparatus of claim 1, wherein the first salinity measuring unit comprises a salinity sensor installed in an introduction pipe for introducing the side stream of the ballast water into the electrolytic cell.

3. The apparatus of claim 1, wherein the first salinity measuring unit uses a method of calculating the salinity from a graph representing a relationship between a voltage applied to the electrolytic cell and the salinity.

4. The apparatus of claim 2, wherein the second salinity measuring unit measures the salinity of the ballast water introduced into the ballast tank by using the salinity sensor of the first salinity measuring unit.

5. The apparatus of claim 1, wherein the second salinity measuring unit measures the salinity by sampling the ballast water of the ballast tanks or by using the salinity sensor installed in the ballast tanks.

6. The apparatus of claim 1, wherein the controller controls a current applied to the electrolytic cell based on a fluid amount of the side stream of the ballast water and a measured total residual oxidant (TRO) concentration.

7. The apparatus of claim 1, further comprising:
an opening and closing valve configured to open and close the side stream of the ballast water introduced into the electrolytic cell; and
a pump configured to introduce the side stream of the ballast water into the electrolytic cell.

8. A method for treating ballast water by using electrolysis, the method comprising:
introducing the ballast water into a ship;
introducing a part of the introduced ballast water into an electrolytic cell;
generating an oxidant through electrolysis in the electrolytic cell;
obtaining a salinity of the ballast water; and
introducing the ballast water in a ballast tank into the electrolytic cell when the obtained salinity is less than a threshold value.

9. The electrolysis method of claim 8, wherein obtaining a salinity of the ballast water comprises obtaining the salinity of the ballast water based on an applied voltage during the electrolysis.

10. The electrolysis method of claim 8, wherein obtaining a salinity of the ballast water comprises obtaining the salinity of the ballast water by a salinity sensor installed in an introduction pipe connected to the electrolytic cell.

11. The electrolysis method of claim 8, further comprising, after an opening and closing valve is installed in a pipe connected to the ballast tank, storing a salinity and a tank to which electrolyzed ballast water is introduced by receiving an opening and closing signal of the opening and closing valve.

12. The electrolysis method of any one of claims 8 to 11, wherein generating an oxidant through electrolysis comprises controlling an applied current based on a fluid amount of the ballast water introduced into the electrolytic cell and a residual oxidant concentration of the ballast water exhausted from the electrolytic cell.
